# EUROPÄISCHE PATENTSCHRIFT

(11) **EP 2 776 743 B1**
(45) Veröffentlichungstag und Bekanntmachung des Hinweises auf die Patenterteilung: **09.12.2015**
(21) Anmeldenummer: 12769445.3
(22) Anmeldetag: 09.10.2012
(51) Int. Cl.: F16H 59/02

(54) **SCHALTEINRICHTUNG ZUM SCHALTEN EINES HANDSCHALTGETRIEBES EINES FAHRZEUGS**
SHIFTING DEVICE FOR SHIFTING A MANUAL TRANSMISSION OF A VEHICLE
DISPOSITIF DE CHANGEMENT DE VITESSE ASSURANT LE PASSAGE DES VITESSES DANS UNE BOÎTE DE VITESSES MÉCANIQUE D'UN VÉHICULE

(30) Priorität: 08.11.2011 DE 102011085902
(43) Veröffentlichungstag der Anmeldung: 17.09.2014
(73) Patentinhaber: Bayerische Motoren Werke Aktiengesellschaft, 80809 München (DE)
(72) Erfinder: SCHÖNBERGER, Stefan, 80937 München (DE); FABIAN, Karsten, 85764 Oberschleissheim (DE); ESSER, Peter-Josef, 82229 Seefeld (DE); WAGNER, Norbert, 81549 Muenchen (DE)
(86) Internationale Anmeldenummer: PCT/EP2012/069910
(87) Internationale Veröffentlichungsnummer: WO 2013/068187

(56) Entgegenhaltungen:
- EP-A1- 0 087 569
- DE-A1- 19 842 620

## Beschreibung

Die vorliegende Erfindung betrifft eine Schalteinrichtung zum Schalten eines Handschaltgetriebes eines Fahrzeugs gemäß dem Oberbegriff des Patentanspruches 1.

Eine derartige Schalteinrichtung ist aus der DE 198 42 620 A1 bekannt.

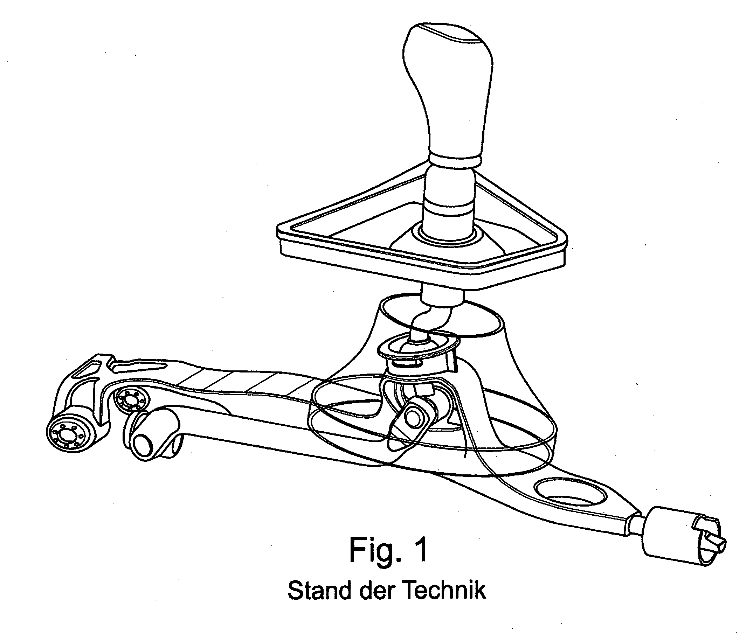

Eine ebenfalls aus dem Stand der Technik, bei BMW Fahrzeugen mit Handschaltgetriebe zum Einsatz kommende Schalteinrichtung ist in Figur 1 gezeigt.

Eine derartige Schalteinrichtung weist einen Schalthebel auf, der... der an einem sich in einer Fahrzeuglängsrichtung erstreckenden Schaltarm schwenkbar gelagert ist. Ein vorderes bzw. getriebeseitiges Ende des Schaltarms ist schwenkbar um eine Querachse des Fahrzeugs mit einem Getriebegehäuse verbunden. Ein unteres Ende des Schalthebels ist über eine Schaltstange gelenkig mit einer Schaltwelle des Getriebes verbunden, welche zur Betätigung von in dem Schaltgetriebe (nicht dargestellt) vorgesehenen Schaltgabeln vorgesehen ist.

Ein hinteres, dem Getriebe abgewandtes Ende des Schaltarms ist über ein einzelnes Schiebelager, das in ein Karosserieblech des Fahrzeugs eingeclipst ist, verschieblich gelagert. Das Schiebelager soll bei einem Crash ein Verschieben des Schaltarms um eine vorgegebene Strecke (z. B. ca. 25mm) ermöglichen, ohne dass dadurch die sich an das Verschiebelager anschließenden Karosseriekomponenten beschädigt werden.

Wie aus Figur 1 ersichtlich ist, ist das Schalthebellager bzw. ist der Schalthebel im Bereich zwischen dem Schiebelager und dem vorderen Ende des Schaltarms angeordnet.

Bei einer derartigen Lagerung des Schalthebels kann es beim Start des Verbrennungsmotors zu sichtbaren und spürbaren Ausschlägen am Schalthebelknopf kommen. Dies ist insbesondere bei modernen Fahrzeugen, die mit einer Motor-/Stoppautomatik ausgerüstet sind, unerwünscht, da der Motor beim Stopp-and-Go-Verkehr sehr häufig abgestellt und wieder gestartet wird. Zur Verringerung von Ausschlägen und Vibrationen des Schalthebelknopfs wurden daher Schalthebeltilger, die ein Zusatzgewicht von circa 400g aufweisen und ein schwerer Schaltknopf, der gegenüber herkömmlichen Schaltknäufen ein Zusatzgewicht von circa 100g aufweist, verbaut.

Aufgabe der Erfindung ist es, eine Schalteinrichtung zum Schalten eines Handschaltgetriebes zu schaffen, die so konstruiert ist, dass, im Vergleich zu herkömmlichen Schalteinrichtungen, Vibrationen und Ausschläge des Schalthebelknopfs, insbesondere beim Starten des Motors möglichst gering sind.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Ausgangspunkt der Erfindung ist eine Schalteinrichtung zum Schalten eines Handschaltgetriebes eines Fahrzeugs, mit einem Schalthebel, der in einem Schalthebellager eines sich in einer Fahrzeuglängsrichtung erstreckenden Schaltarms schwenkbar gelagert ist. Der Schaltarm weist einen getriebeseitigen (oder vorderen) Endschnitt auf, welcher über eine schaltkräfteabstützende "Koppeleinrichtung" mit einem Getriebegehäuse verbunden ist. Die Schaltkräfte wirken primär in Fahrzeuglängsrichtung. Dementsprechend muss die Koppeleinrichtung so konzipiert sein, dass sie in Fahrzeuglängsrichtung wirkende Kräfte aufnehmen kann.

Ein zentraler Gedanke der Erfindung besteht darin, dass der Schaltarm über ein linkes und ein rechtes, d.h. über insgesamt zwei, in einer Fahrzeuglängsrichtung verschiebliche Verschiebelager mit einer Karosserie des Fahrzeugs verbunden ist. Die Verschiebelager sind dazu vorgesehen, ein bei einem Verschwenken des Schalthebels um eine Fahrzeuglängsachse bzw. beim Anwählen einzelner Schaltgassen des Handschaltgetriebes über den Schalthebel eingeleitetes Wählmoment abzustützen.

Die beiden Verschiebelager können in Fahrzeuglängsrichtung betrachtet links bzw. rechts, d. h. auf einander gegenüberliegenden Seiten des Schaltarms angeordnet sein, wodurch sich eine relativ breite Abstützbasis ergibt, über die auch größere Wählmomente problemlos abgestützt werden können.

Die beiden Verschiebelager können als "Cliplager" ausgebildet sein, d. h. als Lager, die einfach in entsprechende Ausnehmungen der den Schaltarm umgebenden Fahrzeugkarosserie eingesetzt werden können.

Die beiden Verschiebelager sind in einem Bereich zwischen dem Schalthebel und dem getriebeseitigen Ende des Schaltarms angeordnet woraus sich ein wesentlicher kinematischer Vorteil ergibt, der später im Zusammenhang mit der Zeichnung noch eingehend erläutert wird.

Ein weiterer wesentlicher Gedanke der Erfindung besteht darin, dass die Koppeleinrichtung den (vorderen bzw. getriebeseitigen) Endbereich des Schaltarms schwenkbar um drei Raumachsen, jedoch translatorisch unverschieblich mit dem Getriebegehäuse verbindet. Im Unterschied zu dem eingangs beschriebenen Stand der Technik werden somit Schwenkbewegungen des Getriebegehäuses, die z. B. beim Starten des Verbrennungsmotor auftreten können, nicht an den Schaltarm weitergeleitet, da der Schaltarm über die Koppeleinrichtung relativ zu dem Getriebegehäuse verschwenkbar ist.

Die Koppeleinrichtung kann als Kugelgelenk oder durch ein kugelkopfartiges Koppelelement gebildet sein. Prinzipiell sind auch andersartige Koppelelemente, z. B. in der Form eines Karcianelements o. ä., denkbar, welche eine schwenkbare Verbindung des Schaltarms um drei Raumachsen und eine translatorisch unverschiebbare Verbindung des Schaltarms mit dem Getriebegehäuse ermöglichen.

Im Folgenden wird die Erfindung im Zusammenhang mit der Zeichnung näher erläutert. Es zeigen:
- Figur 2: eine perspektivische Darstellung einer Schalteinrichtung gemäß der Erfindung;
- Figur 2a: eine Explosionsdarstellung einer Koppeleinrichtung gemäß der Erfindung;
- Figur 2b: das dem Schaltarm zugewandte Ende des Getriebegehäuses mit einem daran angeordneten Kugelkopf;
- Figur 3: eine Detailzeichnung der Schalteinrichtung von der Getriebeunterseite her betrachtet.

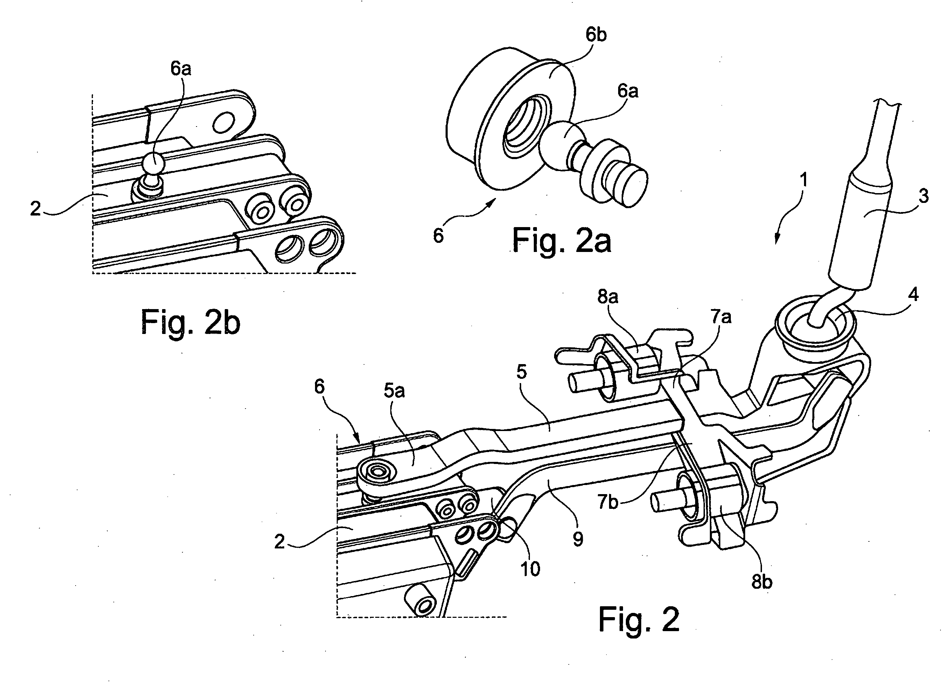

Figur 2 zeigt eine Schalteinrichtung 1 zum Schalten eines Handschaltgetriebes 2. Die Schalteinrichtung 1 weist einen Schalthebel 3 auf, der in einem Schalthebellager 4, welches an einem Schaltarm 5 vorgesehen ist, schwenkbar gelagert ist. Der Schaltarm 5 erstreckt sich im Wesentlichen in einer Fahrzeuglängsrichtung.

Ein dem Handschaltgetriebe 2 zugewandter "vorderer" Endabschnitt 5a des Schaltarms 5 ist über eine Koppeleinrichtung 6 mit einem Gehäuse des Handschaltgetriebes 2 verbunden.

Die Koppeleinrichtung 6 ist, wie Figur 2a zu entnehmen ist, durch ein kugelkopfartiges Element 6a und eine Gelenkpfanne 6b gebildet. Die Gelenkpfanne 6b ist hier in eine Ausnehmung des Schaltarms 5 eingesetzt. Das kugelkopfartige Element 6a ist, wie Figur 2b zu entnehmen ist, fest mit dem Getriebegehäuse des Handschaltgetriebes 2 verbunden. Das kugelkopfartige Element 6a und die Gelenkpfanne 6b bilden ein Kugelgelenk.

Über die Koppeleinrichtung 6 ist das vordere Ende 5a des Schaltarms 5 schwenkbar um drei Raumachsen, jedoch translatorisch unverschieblich mit dem Gehäuse des Handschaltgetriebes verbunden. Über die Koppeleinrichtung 6 können somit Schaltkräfte, welche über den Schalthebel 3 in den Schaltarm 5 eingeleitet werden, gegenüber dem Gehäuse des Handschaltgetriebes 2 abgestützt werden. Schwenkbewegungen des Handschaltgetriebes 2, die z. B. beim Starten des Verbrennungsmotors (nicht dargestellt) auftreten können, werden aufgrund der Schwenkfreiheitsgrade der Koppeleinrichtung 6 jedoch nicht bzw. kaum auf den Schaltarm 5 übertragen.

In einem Bereich zwischen dem Schalthebel 3 und dem getriebeseitigen Ende 5a des Schaltarms 5 ist der Schaltarm 5 über Querlausleger 7a, 7b und über einen damit verbundenes linkes bzw. rechtes in Fahrzeuglängsrichtung verschiebliches Verschiebelager 8a, 8 mit einer Fahrzeugkarosserie (nicht dargestellt) verbunden. Die beiden Verschiebelager 8a, 8b sind dazu vorgesehen, ein bei einem Verschenken des Schalthebels 3 um eine Fahrzeuglängsachse bzw. beim Anwählen einzelner Schaltgassen des Handschaltgetriebes 2 über den Schalthebel 3 eingeleitetes Wählmoment abzustützen. Aufgrund ihres Verschiebefreiheitsgrads ermöglichen sie eine gewisse Relativverschiebung des Schaltarms 5 und des damit verbundenen Getriebegehäuses des Handschaltgetriebes 2 in Fahrzeuglängsrichtung.

Vollständigkeitshalber sei noch eine Schaltstange 9 erwähnt, über die ein unteres Ende des Schalthebels 3 gelenkig mit einer Schaltwelle 10 des Handschaltgetriebes 2 gekoppelt ist. Über die Schaltwelle 10 können einzelne Gänge des Handschaltgetriebes 2 geschaltet werden.

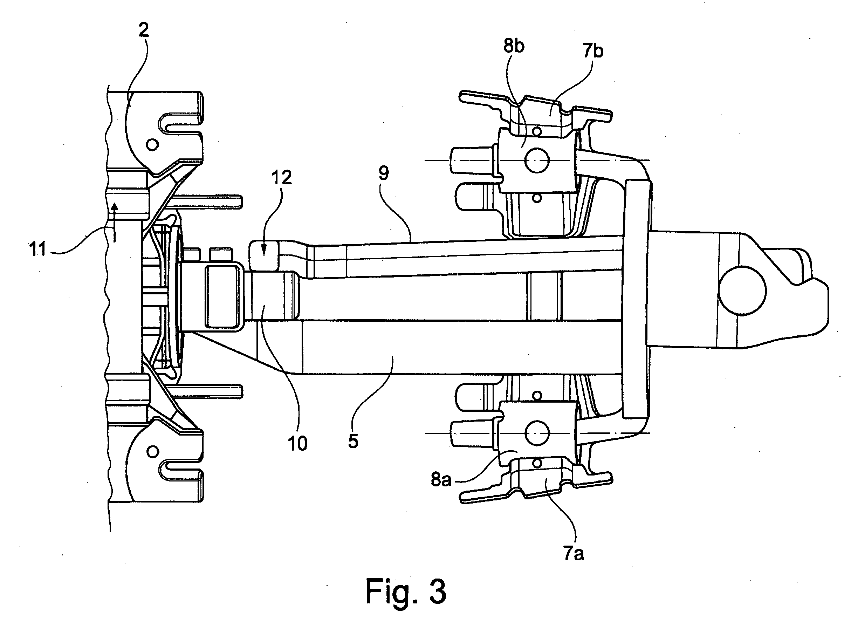

Wie bereits erwähnt, sind die beiden Abstützungen 7a, 7b im Bereich zwischen dem Schalthebel 3 und dem Gehäuse des Handschaltgetriebes 2 angeordnet. Die Verschiebelager 7a, 7b sind karosseriefest angeordnet. Kommt es, z. B. bei einem Start des Verbrennungsmotors, zu einem Ruckeln des Handschaltgetriebes, d. h. zu einer seitlichen Verschiebung des Handschaltgetriebes, was in Figur 3 durch Pfeile 11, 12 angedeutet ist, so überträgt sich diese Verschiebebewegung über die Schaltwelle 10 auf die Schaltstange 9. Da die beiden Abstützungen 7a, 7b im Bereich zwischen dem Schalthebel 3 und dem Gehäuse des Handschaltgetriebes 2 angeordnet sind, kommt es bei einer derartigen seitlichen Verschiebung des Getriebegehäuses zu einer vollständigen oder zumindest teilweisen gegenseitigen Auslöschung der Verschiebebewegungen, was zur Folge hat, dass sich eine seitliche Verschiebung des Gehäuses des Handschaltgetriebes 2 nicht oder nur zu einem geringen Teil bis zum Schalthebel 3 fortpflanzt.

Im Vergleich zu dem eingangs beschriebenen Stand der Technik ergeben sich somit insbesondere beim Starten des Verbrennungsmotors wesentlich geringer Vibrationen bzw. Ausschläge des Schalthebels 3.

## Patentansprüche

1. Schalteinrichtung (1) zum Schalten eines Handschaltgetriebes (2) eines Fahrzeugs, mit
- einem Schalthebel (3) und
- einem sich in einer Fahrzeuglängsrichtung erstreckenden Schaltarm (5), an dem der Schalthebel (3) schwenkbar gelagert ist, wobei der Schaltarm (5) einen Endabschnitt (5a) aufweist, welcher über eine Schaltkräfte abstützende Koppeleinrichtung (6) mit einem Getriebegehäuse verbunden ist, wobei der Schaltarm (5) über ein linkes und ein rechtes Lager (8a, 8b) mit einer Karosserie des Fahrzeugs verbunden ist, wobei die beiden Lager (8a, 8b) dazu vorgesehen sind, ein bei einem Verschwenken des Schalthebels (3) um eine Fahrzeuglängsachse bzw. beim Anwählen einzelner Schaltgassen des Handschaltgetriebes (2) über den Schalthebel (3) eingeleitetes Wählmoment abzustützen,
**dadurch gekennzeichnet, dass**
• es sich bei dem linken und dem rechten Lager (8a, 8b) jeweils um ein in einer Fahrzeuglängsrichtung verschiebliches Verschiebelager (8a, 8b) handelt, wobei
• die beiden Verschiebeläger (8a, 8b) in einem zwischen dem Schalthebel (3) und der Koppeleinrichtung (6) befindlichen Bereich auf einander gegenüberliegenden Seiten des Schaltarms (5) angeordnet sind.

2. Schalteinrichtung nach Anspruch 1, **dadurch gekennzeichnet, dass** die Koppeleinrichtung (6) den Endbereich (5a) des Schaltarms (5) schwenkbar um drei Raumachsen, jedoch translatorisch unverschieblich mit dem Getriebegehäuse bindet.

3. Schalteinrichtung nach einem der Ansprüche 1 öder 2, **dadurch gekennzeichnet, dass** die Koppeleinrichtung (6) durch ein Kugelgelenk oder durch ein kugelkopfartiges Koppelelement (6) gebildet ist.

4. Schalteinrichtung nach einem der Ansprüche 1 bis 3, **dadurch gekennzeichnet, dass** der Schalthebel (3) gelenkig über eine Schaltstange (9) mit einer Schaltwelle (10) des Handschaltgetriebes (2) gekoppelt ist.

## Claims

1. A device (1) for switching a manual gearshift (2) of a vehicle, comprising
- a gearshift lever (3) and
- a switch arm (5) extending in a longitudinal direction of the vehicle, on which the gearshift lever (3) is pivotally mounted, wherein the switch arm (5) has an end portion (5a) connected to a gearbox case via a coupling device (6) for keeping up the switching forces, wherein
the switch arm (5) is connected by a left and a right bearing (8a, 8b) to a vehicle body, wherein the two bearings (8a, 8b) are provided in order to keep up the selecting torque introduced when the gearshift lever (3) pivots round a longitudinal axis of the vehicle or when individual lanes of the gearshift lever (2) are selected,
**characterised in that**
• the left and the right bearing (8a, 8b) in each case are movable in a longitudinal direction of the vehicle, wherein
• the two bearings (8a, 8b) are disposed in a region between the gearshift lever (3) and the coupling device (6) on opposite sides of the switch arm (5).

2. A device according to claim 1, **characterised in that** the coupling device (6) constitutes the end region (5a) of the switch arm (5) pivotable around three dimensional axes but is immovable in translation relative to the gearbox case.

3. A device according to claim 1 or claim 2, **characterised in that** the coupling device (6) is a ball joint or similar coupling element (6).

4. A device according to any of claims 1 to 3, **characterised in that** the gearshift lever (3) is pivotably connected by a sliding selector shaft (9) to a selector shaft (10) of the manual gearshift (2).

## Revendications

1. Installation de commutation pour commuter une boîte de vitesses manuelle (2) d'un véhicule comprenant
- un levier de changement de vitesse (3), et
- un bras de commutation (5) s'étendant dans la direction longitudinale du véhicule en étant relié de manière pivotante au levier de changement de vitesse (3), le bras de commutation (5) ayant un segment d'extrémité (5a) relié à la boîte de vitesses par une installation de couplage (6) qui reçoit les forces de commutation,
dans lequel
le bras de commutation (5) est relié à la caisse du véhicule par un palier gauche et un palier droit (8a, 8b), et lors du basculement du levier de changement de vitesse (3) autour de l'axe longitudinal du véhicule ou lors de la sélection de différents couloirs de commutation de la boîte de vitesses (2) les deux paliers (8a, 8b) soutiennent le couple de sélection induit par le levier de changement de vitesse (3),
installation **caractérisée en ce que**
le palier gauche et le palier droit (8a, 8b) sont constitués chacun par un palier coulissant (8a, 8b) permettant un coulissement dans la direction longitudinale du véhicule,
- les deux paliers coulissants (8a, 8b) se trouvant dans la zone comprise entre le levier de changement de vitesse (3) et l'installation de couplage (6) sur les côtés opposés du bras de commutation (5).

2. Installation de commutation selon la revendication 1,
**caractérisée en ce que**
l'installation de couplage (6) relie la zone d'extrémité (5a) du bras de commutation (5) de façon pivotante autour de trois axes dans l'espace tout en étant bloqué en translation à la boîte de vitesse.

3. Installation de commutation selon l'une des revendications 1 ou 2,
**caractérisée en ce que**
l'installation de couplage (6) est réalisée sous la forme d'une articulation à rotule ou d'un élément de couplage (6) en forme de rotule.

4. Installation de commutation selon l'une des revendications 1 à 3,
**caractérisée en ce que**
le levier de changement de vitesse (3) est couplé de manière articulée par une tige de commutation (9) à l'arbre de commutation (10) de la boîte de vitesses manuelle (2).
